(19) Europäisches Patentamt
European Patent Office
Office européen des brevets

(11) Veröffentlichungsnummer: **0 002 764**
**B1**

(12) # EUROPÄISCHE PATENTSCHRIFT

(21) Anmeldenummer: **78101737.1**

(22) Anmeldetag: **16.12.78**

(51) Int. Cl.³: **C 08 F 110/02, C 08 F 4/00**

(54) **Verfahren zur Herstellung von Polyaethylenen.**

(30) Priorität: **29.12.77 DE 2758719**

(43) Veröffentlichungstag der Anmeldung:
**11.07.79 Patentblatt 79/14**

(45) Bekanntmachung des Hinweises auf die Patenterteilung:
**25.03.81 Patentblatt 81/12**

(84) Benannte Vertragsstaaten:
**BE DE FR GB IT**

(56) Entgegenhaltungen:
**DE - B - 1 216 877**
**FR - A - 1 386 151**

**MAKROMOLEKULARE CHEMIE, 147 (1971) 1—3 DE D. BRAUN et al.: "Kinetik der Polymerisationsauslösung mit aromatischen Pinakolen", Seiten 91—99**

(73) Patentinhaber: **BAYER AG**
**Zentralbereich Patente, Marken und Lizenzen**
**D-5090 Leverkusen 1, Bayerwerk (DE)**

(72) Erfinder: **Mietzsch, Fritz, Dr.**
**Mindener Strasse 4**
**D-5000 Koeln 21 (DE)**

(72) Erfinder: **Rudolph, Hans, Dr.**
**Haydnstrasse 9**
**D-4150 Krefeld (DE)**

(72) Erfinder: **Wolfers, Heinrich, Dr.**
**Niederend 6**
**D-4137 Rheurdt (DE)**

(72) Erfinder: **Alberts, Heinrich, Dr.**
**Morgengraben 16**
**D-5000 Koeln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 002 764 B1

Courier Press, Leamington Spa, England.

# Verfahren zur Herstellung von Polyaethylenen

Die Erfindung betrifft ein Verfahren zur Polymerisation von Äthylen in Gegenwart von 1,2 Diarylglykolen oder 1,2-Diarylglykolalkyläthern als Initiatoren.

Äthylen wird prinzipiell nach zwei verschiedenen Verfahren polymerisiert, nämlich dem Hochdruck- und dem Niederdruckverfahren. Beide werden industriell im großen Maßstab durchgeführt (s. Vieweg, Schley, Schwarz in Kunststoff-Handbuch IV, Polyolefine, Hanser Verlag 1969, 39 ff.).

Von entscheidender Bedeutung für die Eigenschaften des gebildeten Polyäthylens sind die Verzweigungen, die durch Kettenübertragungen zustande kommen und den Schmelzpunkt, die Kristallinität und die Dichte bestimmen. So liegen z.B. der Schmelzpunkt und die Dichte eines wenig verzweigten Polyäthylens bei ca. 130°C bzw. ca. 0,95 g/cm³, während die gleichen Kenndaten für ein stark verzweigtes Polyäthylen 110—115°C bzw. 0,92—0,935 g/cm³ betragen.

Hochkristallines unverzweigtes Polyäthylen mit einer Dichte von 0,95—0,96 g/cm³ wird nach dem Niederdruckverfahren bei Temperaturen unter 100°C, vorzugsweise im Bereich von 50—80°C, und bei niedrigem Druck, beispielsweise 10 atm oder sogar atmosphärischem Druck, in Gegenwart von Organometallverbindungen, die als Ziegler — Katalysatoren bezeichnet werden, erhalten. Der Ausdruck "Ziegler—Katalysator" bezeichnet eine Kombination aus einer Verbindung eines Übergangsmetalls der Nebengruppen IV a — VI a des Periodensystems und aus einer Organometallverbindung eines Metalls der Gruppen I—III des Periodensystems der Elemente. Ein weit verwendetes Ziegler — Katalysator — System basiert auf einer Titanverbindung, beispielsweise Titantetrachlorid und auf einer Aluminiumverbindung, beispielsweise Aluminiumtriäthyl oder Aluminiumdiäthylchlorid. Da solche Katalysatoren durch verunreinigungen wie z.B. Alkohole, Amine, Wasser usw. zersetzt werden, erfordert dieses Verfahren eine hohe Reinheit der Anlagen und extrem sauberes Äthylen als Ausgangsprodukt.

In der Brit. PS 828 828 wird ein Verfahren zur Polymerisation von Olefinen, insbesondere Äthylen, bei einer Temperatur von mindestens 175°C und einem Druck von mindestens 500 at beschrieben. Das so hergestellte Polyäthylen weist Dichten bis 0,95 g/cm³ auf; das Verfahren erfordert aber wie das Niederdruckverfahren Ziegler-Katalysatoren.

In der Technik hat sich neben der Niederdruckpolymerisation von Äthylen besonders das sogenannte Hochdruckverfahren durchgesetzt. Dieses Verfahren wird bei hoher Temperatur und hohem Druck, beispielsweise bei Temperaturen oberhalb 125°C und Drucken oberhalb 500 atm, insbesondere bei 140—300°C und 1000—3000 atm und darüber durchgefürt.

Das Hochdruckpolymerisationsverfahren zeichnet sich gegenüber dem Niederdruckverfahren durch eine sehr hohe Raum — Zeit — Ausbeute aus und stellt geringere Reinheitsanforderungen an die Ausgangsverbindungen; da es aber zu stark verzweigtem Polyäthylen führt, war man daher bemüht, ein Polymerisationsverfahren zu entwickeln, daß unter den Bedingungen der Hochdruckpolymerisation ein wenig verzweigtes Polyäthylen liefert.

Nach Untersuchungen von C. A. Mortimer und W. F. Hammer, J. Polym. Sci. A 2/3, 1301 (1964) sind Verzweigungsgrad und Dichte des Hochdruckpolyäthylens weitgehend von der Art des verwendeten Rakikalbildners unabhängig und werden im wesentlichen nur — wie bereits erwähnt — durch den Äthylendruck und die Reaktionstemperatur dergestalt beeinflußt, daß mit steigendem Druck die Verzweigungen wesentlich zunehmen. Dies hat zur Folge, daß bei Drucken oberhalb 600 atm in der Regel bereits deutlich verzweigte Polyäthylene erhalten werden.

Überraschenderweise wurde nun gefunden, daß schwach verzweigtes Polyäthylen mit einer Dichte von mehr also 0,935 ga/cm³, insbesondere von 0,938—0,950 g/cm³ und einem Schmelzpunkt von mindestens 115°C, insbesondere 117—125°C, durch Polymerisation von Äthylen bei Temperaturen von wenigstens 100°C, vorzugsweise 130°C—300°C, und einem Druck von wenigstens 600 atm, vorzugsweise 700—3000 atm in Gegenwart Radikale bildender Initiatoren erhalten werden, wenn als Initiatoren Verbindungen eingesetzt werden, denen die Pinakolstruktur zugrunde liegt.

Gegenstand der Erfindung ist daher ein Verfahren zur Homopolymerisation von Äthylen mit oder ohne Lösungsmittel bei Temperaturen von 100—350°C, vorzugsweise 130—300°C und einem Druck von 600—3500 atm, vorzugsweise 700—3000 atm in Gegenwart von Initiatoren, das dadurch gekennzeichnet ist, daß als Initiatoren 1,2-Glykole oder 1,2-Glykol-derivate der allgemeinen Formel (I)

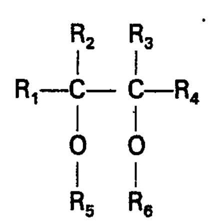

(I)

worin

$R_1$ und $R_3$, gleich oder verschieden, einen gegebenenfalls durch $C_1$—$C_4$-Alkyl (vorzugsweise Methyl), Methoxy, Chlor oder Fluor substituierten Arylrest (vorzugsweise mit 6

bis 12 C-Atomen, besonders bevorzugt Phenyl, Tolyl, p-tert.-Butylphenyl, o- und p-Chlorphenyl, 2.4- Dichlorphenyl, Naphthyl, Biphenylyl, m- Methoxyphenyl),

$R_2$, $R_4$, $R_5$ und $R_6$, gleich oder verschieden, entweder $R_1$ bzw. $R_3$ oder einen gegebenenfalls durch $C_1$—$C_4$-Alkyl (vorzugsweise Methyl), Methoxy, Chlor oder Fluor substituierten Alkylrest mit 1—6 C-Atomen, vorzugsweise Methyl, Äthyl, Isopropyl, Cycloalkylrest mit 5—7 C-Atomen, vorzugsweise Cyclohexyl oder Wasserstoff bedeuten,

verwendet werden

Zwar wird in der DT—AS 1 216 877 bereits ein Verfahren zur Polymerisation von Äthylen in Gegenwart von tetrasubstituierten 1,2-Glykolen bei Temperaturen von 100—250°C und Drucken bis zu 540 atm beschrieben. Bei dieser Verfahrensweise werden jedoch nur in mäßigen Raum-Zeit-Ausbeuten nur niedermolekulare Polyäthylene erhalten.

Zur Durchführung der Polymerisation werden 0,001—10 Gew.-%, vorzugsweise 0,01—2,0 Gew.-%, bezogen auf die Menge des eingesetzten Äthylens oder der Summe Äthylen und sonstige Monomere, Initiator verwendet. Die Initiatoren können in Substanz, bevorzugt in Lösung, zugegeben werden. Als Lösungsmittel seien angeführt: niedere Alkohole wie z.B. Methanol, Äthanol, Isopropanol, tert. Butanol, Carbonsäureester wie z.B. Essigsäureester, Äther wie z.B. Diäthyläther, Dibutyläther, Anisol, Tetrahydrofuran, Dioxan und 1,2-Dimethoxyäthan, Aromaten und Alkyl substituierte Aromaten wie z.B. Benzol, Toluol oder Xylol, gerad- oder verzweigtkettige Paraffine wie z.B. Petroläther und Leichtbenzin, Cycloaliphaten wie z.B. Cyclohexan und Dekalin, Trialkylphosphate wie z.B. Triäthylphosphate, N,N-disubstituierte Amide, wie z.B. N,N-Dimethylacetamid und Hexamethylphosphorsäuretriamid oder Gemische der genannten Lösungsmittel.

Besonders bevorzugt können als Initiatoren Pinakole wie Acetophenonpinakol, Benzpinakol, 1,2 - Diphenyl - 1,2 - di - (4 - tolyl) - 1,2 - glykol, Tetra - (4-tolyl) -1,2 - glykol, 1,2 - Diphenyl - 1,2 - di - (4-tert.butylphenyl) - 1,2 - glykol, Tetra - (4 - chlorphenyl) - 1,2 - glykol bzw. Pinakoläther wie Benzpinakol - monomethyläther, Benzpinakoldimethyläther, Acetophenonpinakoldimethyläther und Tetra - (4 - tolyl) - 1,2-glykoldimethyläther verwendet werden.

Das erfindungsgemäße Verfahren kann diskontinuierlich, bevorzugt aber kontinuierlich in Rührkessel- oder Röhrenreaktoren durchgeführt werden. Nach Beendigung der Polymerisation wird das im Reaktor oder in den Reaktoren gebildete Polymer von dem nichtumgesetzten Äthylen abgetrennt und nach den üblichen Verfahren aufgearbeitet. Das nichtumgesetzte Äthylen wird mit frischem Äthylen gemischt und zum Reaktor zurückgeführt.

Das erfindungsgemäße Verfahren kann ohne oder in Gegenwart von Lösungsmitteln durchgeführt werden. Als Lösungsmittel für die Äthylenpolymerisation seien genannt niedere Alkohole wie z.B. Methanol, Äthanol, tertiäres Butanol, Carbonsäureester wie z.B. Essigester, Kohlenwasserstoffe wie z.B. Benzol, Toluol, Xylol oder gerad- oder verzweigtkettige Paraffine wie z.B. Petroläther, Leichtbenzin oder andere Benzinfraktionen, Cycloaliphaten wie z.B. Cyclohexan oder Lösungsmittelgemische. Wenn unter Verwendung von Lösungsmitteln gearbeitet wird, sind Kohlenwasserstoffe bevorzugt.

Zur Verminderung des Molekulargewichtes und somit zur Erhöhung des Schmelzindex kann das erfindungsgemäße Verfahren auch in Gegenwart von Kettenüberträgern wie z.B. Mercaptanen durchgeführt werden. Da das Molekulargewicht ferner durch die Reaktionsbedingungen, vorzugsweise Temperatur und Druck, gesteuert werden kann, ist es möglich, die Eigenschaften des Polyäthylens in weiten Bereichen zu variieren. Der genaue Effekt der jeweiligen Bedingungen kann aber nur durch das Experiment bestimmt werden.

In die Äthylenpolymeren die gemäß der Erfindung hergestellt worden sind, können nach Bedarf verschiedene Zusätze eingemischt werden, wie z.B. Antioxydantien, UV-Stabilisatoren, Schwefelverbindungen, Phosphorverbindungen, Farbstöffe, Pigmente, Füllstoffe und antistatische oder flammhemmende Mittel in bekannten Mengen.

Die nach dem erfindungsgemäßen Verfahren hergestellten Athylen-Homopolymerisate können nach den üblichen Verfahren der Polyäthylenverbeiter zu Folien, vorzugsweise für den Verpackungssektor, zu Beschichtungszwecken, zu Spritzgußartikeln und auf Extrusionsmaschinen zu Platten z.B. für Tiefziehverformung oder für gestanzte Formkörper verarbeitet werden.

## Beispiel 1

Ein 1000-ml-Rührautoklav, der einen Dosieraufsatz von 20 ml mit Absperrventil trägt, wurde mit 200 ml Cyclohexan beschickt. In den Dosieraufsatz wurden 200 mg Tetra-(4-tolyl)-1,2-glykol als Lösung in 10 ml Cyclohexan gegeben. Dann entfernte man sorgfältig alle Luft aus dem Reaktor durch mehrfaches Evakuieren und Spülen mit Äthylen. Bei Raumtemperatur wurde Äthylen bis zu einem Druck von 400 bar aufgepreßt. Dann steigerte man die Temperatur auf 150°C und brachte den Innendruck durch weiteres Nachpressen von Äthylen auf 1000 bar. Nachdem der Gleichgewichtszustand erreicht war, wurde der Inhalt des Dosieraufsatzes mit Äthylen in den Autoklaven gedrückt. Die Reaktion trat alsbald ein, erkennbar an einem raschen Abfall des Reaktorinnendrucks. Durch Nachpressen von Äthylen wurde

jedoch einem größeren Druckabfall vorgebeugt. Nach 60 min Reaktionszeit kühlte man ab, enspannte und öffnete den Reaktor, um das entstandene Äthylenpolymer zu entnehmen. Es wurde bei 50°C im Vakuum bis zur Gewichtskonstanz getrocknet. Erhalten wurden 152 g Polyäthylen mit einer Grenzviskositätszahl $[\eta] = 0{,}41$ dl/g* gemessen in Tetralin bei 120°C*). Die Dichte des Polymeren betrug 0,943 g/ml, Schmelzpunkt des Polymeren: 120°C **).

Beispiel 2

Man verfuhr wie in Beispiel 1; verwendete jedoch als initiator Tetra-(4-tolyl)-1,2-glykoldimethyläther. Ferner polymerisierte man abweichend bei 140°C. Man erhielt 170 g Produkt, mit einer Grenzviskositätszahl 0,56 dl/g+) und einer Dichte 0,94 g/ml, Schmelzpunkt des Polymeren: 118°C++).

Beispiel 3

Ein 150-ml-Hochdruckreaktor zur kontinuierlichen Äthylenpolymerisation mit einer effektiven Rührvorrichtung wurde stündlich mit 580 g Äthylen beschickt. Unmittelbar vor dem Reaktoreintritt dosierte man 340 mg/h de Initiators aus Beispiel 1 als 20 %ige Lösung in Cyclohexan in den Äthylenstrom ein. Durch äußere Wärmezufuhr und durch Justierung des Druckhalteventils am Reaktorausgang wurden eine Innentemperatur vor 195°C und ein Innendruck von 1800 bar eingestellt. Aus der Entspannvorlage konnten stündlich 85 g Polyäthylen entnommen werden. Die Grenzviskositätszahl betrug 0,71 dl/g+), die Dichte 0,941 g/ml, Schmelzpunkt des Polymeren: 119°C++).

**Patentansprüche**

1. Verfahren zur Herstellung von Polyäthylen mit einem niedrigeren Verzweigungsgrad, einer Dichte von mehr als 0,935 g/cm³, und einem Schmelzpunkt von mindestens 115°C, durch Polymerisation von Äthylen gegebenenfalls in Gegenwart eines inerten Lösungsmittels, bei Temperaturen von 100—350°C und einem Druck von 600—3500 atm in Gegenwart von Initiatoren, dadurch gekennzeichnet, daß als Initiatoren 1,2-Glykole oder 1,2-Glykolderivate der allgemeinen Formel I

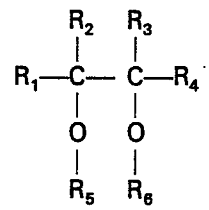

(I)

worin

$R_1$ und $R_3$ gleich oder verschieden, einen gegebenenfalls durch $C_1$—$C_4$-Alkyl, Methoxy, Chlor oder Fluor substituierten Arylrest

$R_2$, $R_4$, $R_5$ und $R_6$ gleich oder verschieden, entweder $R_1$ bzw. $R_3$ oder einen gegebenenfalls durch $C_1$—$C_4$-Alkyl, Methoxy, Chlor oder Fluor substituierten Alkylrest mit 1—6 C-Atomen, Cycloalkylrest mit 5—7 C-Atomen oder Wasserstoff bedeuten,

in Mengen von 0,001—10 Gew.-% verwendet werden.

2. Verfahren nach Anspruch 1, dadurch gekennzeichnet, daß

$R_1$ und $R_3$ für Phenyl, Tolyl, p-tert.-Butylphenyl, o-, p-Chlorphenyl, 2-, 4-Dichlorphenyl, Naphthyl, Diphenyl oder m-Methoxyphenyl und $R_2$, $R_4$, $R_5$ und $R_6$ für $R_1$ bzw. $R_3$, Methyl, Äthyl, Isopropyl, Cyclohexyl oder Wasserstoff steht.

3. Verfahren nach Anspruchen 1 oder 2, dadurch gekennzeichnet, daß als Initiatoren Acetophenonpinakol, Benzpinakol, 1,2 - Diphenyl - 1,2 - di - (4 - tolyl) - 1,2 - glykol, Tetra - (4 - tolyl) - 1,2 - glykol, 1,2 - Diphenyl - 1,2 - di - (4 - tert. - butyl - phenyl) - 1,2 - glykol, Tetra - (4 - chlorphenyl) - 1,2 - glykol, Benzpinakolmonomethyläther, Benzpinakoldimethyläther, Acetophenonpinakoldimethyläther oder Tetra - (4 - tolyl) - 1,2 - glykoldimethyläther verwendet werden.

4. Verfahren nach Ansprüchen 1—3, dadurch gekennzeichnet, daß der Initiator in Mengen von 0,01—2,0 Gew.-% eingesetzt wird.

**Claims**

1. Process for the preparation of polyethylene with a relatively low degree of branching, a density of more than 0.935 g/cm³ and a melting point of at least 115°C by the polymerisation of ethylene, optionally in the presence of an inert solvent at temperatures of from 100 to 350°C and under a pressure of from 600 to 3500 atmospheres in the presence of initiators,

*) W. Hoffmann, H. Krömer und R. Kuhn in "Polymeranalytik 1", Georg Thieme Verlag, Stuttgart 1977

**) W. Hoffmann, H. Krömer und R. Kuhn in "Polymeranalytik II", Georg Thieme Verlag, Stuttgart 1977, 172 f.

characterised in that 1,2-glycols or 1,2-glycol derivatives of the general formula I

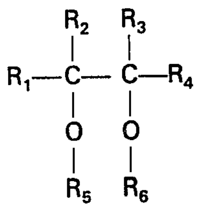

(I)

in which

$R_1$ and $R_3$, which may be the same or different, each denote an aryl radical which may be substituted by $C_1$—$C_4$ alkyl, methoxy, chlorine or fluorine,

$R_2$, $R_4$, $R_5$ and $R_6$, which may be the same or different, either have the same meaning as $R_1$ and $R_3$ or each represents a $C_1$—$C_6$ alkyl radical which may be substituted by $C_1$—$C_4$ alkyl, methoxy, chlorine or fluorine, a $C_5$—$C_7$ cycloalkyl radical or hydrogen,

are used as initiators in amounts of from 0.001 to 10% by weight.

2. A process according to claim 1, characterised in that

$R_1$ and $R_3$ each represents phenyl, tolyl, p. - tert. - butylphenyl, o - chlorophenyl, p - chlorophenyl, 2 - dichlorophenyl, 4 - dichlorophenyl, naphthyl, diphenyl or m - methoxyphenyl and

$R_2$, $R_4$, $R_5$ and $R_6$ each has the same meaning as $R_1$ or $R_3$ or each represents methyl, ethyl, isopropyl, cyclohexyl or hydrogen.

3. A process according to claims 1 or 2, characterised in that the initiators used are acetophenone pinacol, benz - pinacol, 1,2 - diphenyl - di - (4 - tolyl) - 1,2 - glycol, tetra - (4 - tolyl) - 1,2 - glycol, 1,2 - diphenyl - 1,2 - di - (4 - tert. - butylphenyl) - 1,2 - glycol, tetra - (4) - chlorophenyl) - 1,2 - glycol, benz - pinacol monomethyl ether, benz - pinacol dimethyl ether, acetophenone pinacol dimethyl ether or tetra - (4 - tolyl) - 1,2 - glycol dimethyl ether.

4. A process according to claims 1 to 3, characterised in that the initiator is used in amounts of from 0.01 to 2.0% by weight.

**Revendications**

1. Procédé de fabrication de polyéthylène ayant un faible degré de ramification, une densité de plus de 0,935 g/cm$^3$ et un point de fusion d'au moins 115°C par polymérisation de l'éthylène, éventuellement en présence d'un solvant inerte à des températures de 100 à 350°C et sous une pression de 600 à 3500 atmosphères en présence d'initiateurs, caractérisé en ce qu'on utilise en tant qu'initiateurs des 1,2-glycols ou dérivés de 1,2-glycols de formule générale I:

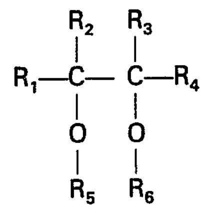

(I)

dans laquelle

$R_1$ et $R_3$, identiques ou différents, représentent un radical aryle éventuellement substitué par un alcoyle en $C_1$—$C_4$, un méthoxy, du chlore ou fluor,

$R_2$, $R_4$, $R_5$ et $R_6$, identiques ou différents, représentent soit $R_1$ ou $R_3$ ou bien un radical alcoyle, ayant 1 à 6 atomes de carbone éventuellement substitué par un alcoyle en $C_1$—$C_4$, un méthoxy, du chlore ou fluor, un radical cycloalcoyle ayant 5 à 7 atomes de carbone ou de l'hydrogène,

en des quantités de 0,001 à 10% en poids.

2. Procédé selon la revendication 1, caractérisé en ce que:

$R_1$ et $R_3$ représentent un phényle, tolyle, p-t-butylphényle, o-, p-chlorophényle, 2,4-dichlorophényle, naphtyle, diphényle ou m-méthoxyphényle et

$R_2$, $R_4$, $R_5$ et $R_6$ représentent $R_1$ ou $R_3$, méthyl, éthyle, isopropyle, cyclohexyle ou de l'hydrogène.

3. Procédé selon l'une quelconque des revendications 1 et 2, caractérisé en ce qu'on utilise comme initiateurs l'acétophénone pinacol, le benzo - pinacol, le 1,2 -diphényl - 1,2 - di - (4 - tolyl) - 1,2 - glycol, le tétra - (4 - tolyl) - 1,2 - glycol, le 1,2 - diphényl - 1,2 - di - (4 - t - butylphényl) - 1,2 - glycol, le tétra - (4 - chlorophényl) - 1,2 - glycol, l'éther monométhylique de benzopinacol, l'éther diméthylique de benzopinacol, le diméthyl - éther d'acétophénone pinacol ou le diméthyl - éther de tétra - (4 - tolyl) - 1,2 - glycol.

4. Procédé selon l'une quelconque des revendications 1 à 3, caractérisé en ce que l'initiateur est utilisé en des quantités de 0,01 à 2,0% en poids.